# EUROPÄISCHE PATENTSCHRIFT

(11) **EP 0 899 889 B1**
(45) Veröffentlichungstag und Bekanntmachung des Hinweises auf die Patenterteilung: **20.07.2005**
(21) Anmeldenummer: 98116065.8
(22) Anmeldetag: 26.08.1998
(51) Int. Cl.: H04B 1/08, B60R 11/02

(54) **Autoradio mit abnehmbarem Bedienteil**
Car radio with removable front panel
Récepteur radio d'un vehicule avec un panneau frontal amovible

(30) Priorität: 28.08.1997 DE 19737322
(43) Veröffentlichungstag der Anmeldung: 03.03.1999
(73) Patentinhaber: Delphi Technologies, Inc., Troy, MI 48098 (US)
(72) Erfinder: Hallas, Ernst, Dr., Kurgartenstrasse 37, 90762 Fürth (DE)
(74) Vertreter: Manitz, Finsterwald & Partner

(56) Entgegenhaltungen:
- EP-A- 0 788 243
- DE-A- 4 244 468
- DE-A- 4 432 589

## Beschreibung

Die Erfindung betrifft ein Autoradio nach dem Oberbegriff des Anspruchs 1 (vgl. EP-A-0 788 243).

Derartige Autoradios mit abnehmbarem Bedienteil wurden zum Zwecke eines Diebstahlschutzes entwickelt. Nimmt der Autoradiobesitzer beim Aussteigen aus dem Fahrzeug das abgenommene Bedienteil mit, welches er wegen seiner kleinen Abmessungen im allgemeinen problemlos in einer Jackentasche unterbringen kann, dann wird das im Auto verbleibende Autoradiogehäuse im Falle eines Diebstahls wertlos, da eine Bedienung des Gerätes ohne Bedienteil nicht möglich ist.

Weiterhin sind bereits Autoradios mit Cassettenteil und Autoradios mit einem Einführschlitz für eine compact disc (CD) bekannt. Die Einführöffnung für die Cassette bzw. der Einführschlitz für die CD ist bei den bekannten Autoradios in die auf der Vorderseite des Autoradiogehäuse befindliche Bedienfront eingebracht, so daß ein Einführen einer Cassette bzw. ein Einführen einer CD ohne weiteres möglich ist.

Aus der DE-A-42 44 468 ist ein Bediensystem mit einem abnehmbaren Bedienteil bekannt, das über eine drahtlose Übertragungseinrichtung mit dem Bediensystem verbunden ist, so dass das Bedienteil als Fernbedienung eingesetzt werden kann.

Es ist die Aufgabe der Erfindung, ein Autoradio der eingangs genannten Art dahingehend weiterzubilden, dass auch bei aufgesetztem Bedienteil und höherwertigen Geräten ein verbesserter Diebstahlschutz gegeben ist.

Die Lösung dieser Aufgabe erfolgt durch die Merkmale des Anspruchs 1.

Die Vorteile der Erfindung bestehen insbesondere darin, daß ein mit den Merkmalen der Erfindung versehenes Autoradio von jeder Sitzposition des Fahrzeugs aus bedienbar ist. Insbesondere kann auch jeder der im Fahrzeugfond sitzenden Passagiere mittels des als Fernbedienung verwendbaren abgenommenen Bedienteils Bedienbefehle zur Steuerung des Autoradios eingeben. Diese Bedienbefehle werden über einen an der Bedieneinheit vorgesehenen Infrarotsender ausgestrahlt und von einem an der Vorderseite des Autoradiogehäuses, welches in das Armaturenbrett des Autos eingebaut ist, vorgesehenen Infrarotempfänger empfangen und an den Mikrocomputer des Autoradios weitergegeben, der dann für die entsprechende Verarbeitung sorgt. Durch diese Möglichkeit ist in vielen Fällen der Fahrer des Fahrzeugs von der Bedienung des Autoradios befreit und kann seine volle Aufmerksamkeit dem Verkehrsgeschehen widmen. Dies wiederum führt zu einer Reduzierung der Anzahl von Verkehrsunfällen, die auf einer Unaufmerksamkeit des Fahrers beruhen.

Mit der Erfindung wird erreicht, daß zum einen auf dem Bedienteil selbst der für die Bedientasten zur Verfügung stehende Platz vergrößert ist, da im Bedienteil keinerlei Öffnungen oder Schlitze zum Einführen von Datenträgern notwendig sind. Weiterhin steht die gesamte Vorderseite des Autoradiogehäuses zur Verfügung, um Anschlußmöglichkeiten bzw. Kontaktstellen für eine Vielzahl verschiedener Datenträger bzw. weiterer elektronischer Geräte bereitzustellen. Dadurch besteht die Möglichkeit, im Kraftfahrzeug eine Kommunikationsanlage bzw. ein Multimediasystem zu schaffen, in welches eine Vielzahl von verschiedenartigen signalverarbeitenden Geräten und Datenträgern integriert ist. Da diese Kontaktstellen bei aufgesetztem Bedienteil nicht sichtbar sind, ist bei einer geeigneten Gestaltung der Oberfläche des Bedienteils nicht ersichtlich, ob es sich bei dem Autoradio um ein höherwertiges Gerät handelt oder nicht. Dadurch ist auf den ersten Blick kein Anreiz für einen Diebstahl des Gerätes gegeben.

Die Unteransprüche beschreiben, welche Kontaktstellen in vorteilhafter Weise zur Verfügung gestellt werden. Alle diese Kontaktstellen sind vorhanden. Es ist dem jeweiligen Benutzer überlassen, ob er sie verwendet oder nicht.

Der Vorteil der im Anspruch 4 angegebenen Merkmale besteht darin, daß dem Benutzer optisch signalisiert wird, welche Datenträger momentan in das Autoradiogehäuse eingesetzt sind. Er bekommt dadurch einen schnellen Überblick über den Istzustand des Gerätes. Dies ist insbesondere dann von Vorteil, wenn die Anzahl der vorhandenen Kontaktstellen groß ist.

Mittels der in Anspruch 5 angegebenen Merkmale ist eine bidirektionale Signalübertragung durchführbar. Dies ermöglicht unter anderem eine Verwendung des abgenommenen Bedienteils als Diktiergerät, als Anschlußmöglichkeit für einen
Kopfhörer und als Telefonhörer bzw. als schnurlose Telefoneinheit.

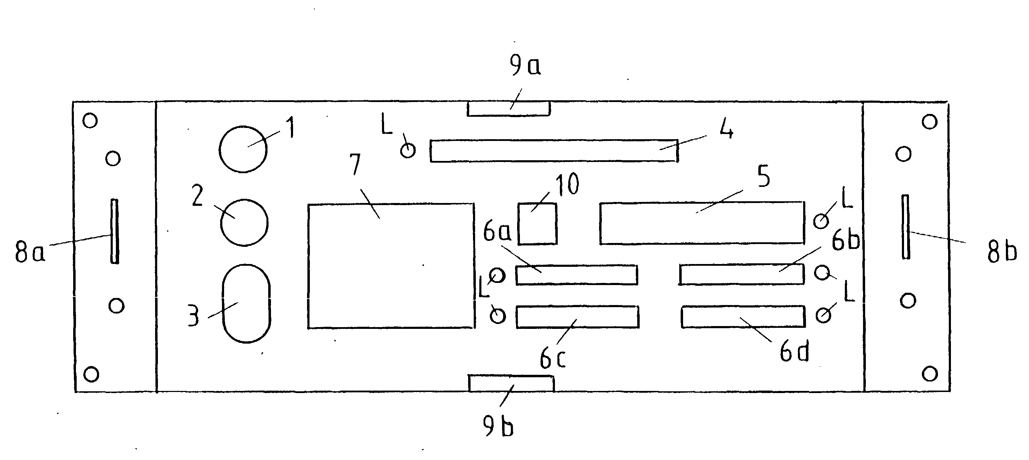

Weitere vorteilhafte Eigenschaften der Erfindung ergeben sich aus der Erläuterung eines Ausführungsbeispiels anhand der Figur. Diese zeigt die Vorderseite eines rechteckförmigen Autoradiogehäuses bei abgenommenem Bedienteil. Die gezeigte Vorderseite des Autoradiogehäuses weist eine Vielzahl von Kontaktstellen für Datenträger und weitere elektronische Geräte auf. Diese Kontaktstellen sind nur bei abgenommenem Bedienteil zugänglich. Mit der Bezugsziffer 1 ist ein Mikrofonsteckkontakt gezeigt, über den ein mit einem Kabel verbundenes Mikrofon ansteckbar ist. Dadurch wird dem Benutzer die Möglichkeit gegeben, das Autoradio auch als Diktiergerät zu benutzen, wobei die Aufzeichnung auf einen in das Gerät eingesetzten Aufzeichnungsträger oder einen in das Gerät integrierten Halbleiterspeicher erfolgt. Die Verwendung eines Mikrofons, welches nahe an den Mund des Sprechers gehalten werden kann, hat insbesondere den Vorteil, daß die Aufzeichnung mit vergleichsweise guter Qualität erfolgen kann. Insbesondere können Fahrgeräusche und weiterer, durch das Verkehrsgeschehen bedingter Lärm den Aufzeichnungsvorgang nicht so sehr stören, daß die aufgezeichneten Sprachsignale vom Umgebungslärm in Bezug auf die Signalamplitude übertroffen werden. Je nach Länge des mit dem Mikrofon verbundenen Kabels kann gegebenenfalls jeder der Passagiere des Fahrzeugs das Mikrofon und damit das Autoradio als Diktiergerät benutzen.

Die Bezugsziffer 2 bezeichnet einen Kopfhöreranschluß, über den mit einem Kabel verbundene Kopfhörer an das Autoradio angeschlossen werden können. Dies bringt den Vorteil mit sich, daß beispielsweise der Beifahrer oder einer der Passagiere auf den Fondsitzen auch dann Musik hören kann, wenn der Fahrer des Fahrzeugs keine über die Lautsprecher des Fahrzeugs erfolgende Wiedergabe von Tonsignalen wünscht. Dies ist insbesondere bei längeren Urlaubsreisen von Vorteil, wenn im Fahrzeug mitfahrende Kinder abwechselnd oder gleichzeitig Kinderkassetten hören wollen, an deren Inhalt der fahrzeugführende Vater kein Interesse hat.

Mit der Bezugsziffer 3 ist eine RS232C-Schnittstelle gezeigt. An diese Schnittstelle ist beispielsweise ein Laptop anschließbar, mittels dessen eine Auswertung von im Rahmen einer RDS- oder DAB-Rundfunkübertragung als Begleitinformationen gesendeten Zusatzdaten erfolgen kann. Bei diesen Zusatzdaten kann es sich um Verkehrsnachrichten, Wetterinformationen, Reisenachrichten, lokale Informationen, usw., handeln.
Die Bezugsziffer 4 bezeichnet einen Einführschlitz, in den plattenförmige Datenträger wie eine CD, eine CD-ROM, eine DVD (Digitale Video-Disk) und/oder eine Minidisk einführbar sind. Um eine Wiedergabe der auf diesen Datenträgern aufgezeichneten Informationen durchführen zu können, sind im Autoradiogehäuse zugehörige Laufwerke, Abtastvorrichtungen und Signalverarbeitungsschaltungen vorgesehen, deren grundsätzlicher Aufbau bekannt ist.

Mit der Bezugsziffer 5 ist eine Einführöffnung für eine Compactcassette gezeigt, die als Datenträger ein Magnetband aufweist.

Weiterhin weist das in der Figur gezeigte Autoradiogehäuse mit 6a, 6b, 6c und 6d bezeichnete Schlitze auf, die zur Einführung von Multimediakarten (MMC) vorgesehen sind. Für derartige Multimediakarten gibt es eine Vielzahl von Anwendungsmöglichkeiten. Eine derartige Karte kann beispielsweise verwendet werden, um eine Entriegelung bzw. Freischaltung des Gerätebetriebes vorzunehmen. Ist diese Karte nicht in das Gerät eingeführt, dann gibt der Mikrocomputer den Betrieb des Gerätes nicht frei.

Weiterhin kann mittels einer derartigen Karte eine Freischaltung bestimmter Rundfunkkanäle erfolgen, die gebührenpflichtig sind. Durch den Kauf der Karte beispielsweise im Zeitschriftenhandel erwirbt der Benutzer das Recht und die Möglichkeit, in den genannten Kanälen für eine vom Kartenpreis abhängige Zeitdauer Signale empfangen zu können. Diese Signale können gegebenenfalls auch verschlüsselt übertragen werden, wobei zur Entschlüsselung notwendige Entschlüsselungsdaten auf der Karte abgespeichert sind und nach dem Einstecken der Karte vom Mikrocomputer des Gerätes gelesen werden.

Ferner können auf derartigen Multimediakarten auch Daten abgespeichert sein, die Musiksendungen oder Stadtplänen entsprechen. Diese Daten können nach dem Einführen der jeweiligen Karte über die Lautsprecher des Fahrzeugs, die im Fahrzeug befindlichen Kopfhöreranschlüsse oder im Fahrzeug befindliche Displays wiedergegeben werden.

Mit der Bezugsziffer 7 ist ein Steckplatz für ein Mobiltelefon bzw. Handy bezeichnet. Ist das Handy in den genannten Steckplatz eingesetzt, dann werden dessen Akkus über das Bordnetz des Kraftfahrzeugs aufgeladen. Weiterhin wird durch die Bereitstellung eines derartigen Steckplatzes erreicht, daß das Handy an einer für den Fahrer leicht zugänglichen Stelle im Fahrzeug befestigt untergebracht ist, so daß es während der Fahrt bei ruckhaften Veränderungen der Fahrtgeschwindigkeit oder bei Kurvenfahrten nicht hin- und herrutschen oder auf den Boden des Fahrzeugs fallen kann. Das Handy kann über den Steckplatz derart funktionell integriert werden, daß es über eine übliche Freisprecheinrichtung in üblicher Weise ge- und benutzt werden kann, wobei die Bedienung des Handys dann über das abnehmbare Bedienteil bzw. die Bedienfront erfolgt.

Die Bezugsziffern 8a und 8b bezeichnen Kontaktleisten, über die eine Signalübertragung dann erfolgt, wenn ein nicht gezeichnetes abnehmbares Bedienteil auf die Vorderseite des Autoradiogehäuses aufgesetzt ist. Mittels der Bedientasten dieses Bedienteils sind Bedienbefehle eingebbar, die über die genannte(n) Kontaktleiste(n) zum Mikrocomputer des Autoradios übertragen werden, der dann die entsprechende Gerätesteuerung vornimmt. Das abnehmbare Bedienteil ist am Autoradiogehäuse mittels eines Schnappmechanismus befestigt. Zum Abnehmen des Bedienteils sind Drucktasten 9a und 9b vorgesehen, die zu einer mechanischen Auslösung dienen. Beispielsweise stehen diese Tasten in Wirkverbindung mit einer am Autoradiogehäuse vorgesehenen Feder, hinter der eine Nase des Bedienteils einrastet. Diese Feder wird durch die Betätigung der Drucktasten hinabgedrückt, so daß das Bedienteil vom Autoradiogehäuse gelöst wird. Im weiteren ist vorgesehen auch weitere Haltemechanismen, wie etwa magnetisch unterstützte Haltemaechanismen, können angewendet werden.

Mit der Bezugszahl 10 ist eine Infrarotsende- und Empfangseinheit bezeichnet, die zum Senden und Empfangen von Infrarotdatentelegrammen vorgesehen ist. Die empfangenen Infrarotdatentelegramme stammen von der abgenommenen Bedieneinheit, die im abgenommenen Zustand von jedem der Passagiere des Fahrzeugs als Fernbedienung verwendet werden kann. Auch die Bedieneinheit ist mit einer Infrarotsende- und Empfangseinheit versehen, so daß zwischen dem Autoradiogehäuse und der abgenommenen Bedieneinheit eine bidirektionale Signalübertragung erfolgen kann. Von der Bedieneinheit zum Autoradiogehäuse erfolgt eine Übertragung von Bedienbefehlen, die von der am Autoradiogehäuse vorgesehenen Infrarotempfangseinheit empfangen und von dort aus dem Mikrocomputer des Autoradios zugeführt werden. Bei den vom Autoradiogehäuse zur Bedieneinheit übertragenen Infrarotsignalen kann es sich um Audiosignale oder Datensignale handeln. Die von der Bedieneinheit empfangenen Audiosignale sind beispielsweise Signale, die vom Rundfunkempfangsteil des Autoradios empfangen wurden, oder Signale, die von einem der in das Autoradiogehäuse eingeschobenen Datenträger wiedergegeben wurden. Diese Audiosignale werden entweder über einen in das Bedienteil integrierten Lautsprecher wiedergegeben oder an einem Kopfhöreranschluß des Bedienteils zur Verfügung gestellt. Sind an den Kopfhöreranschluß des Bedienteils Kopfhörer angeschlossen, dann kann einer der Passagiere des Fahrzeugs auf seinem Sitzplatz beispielsweise Musik hören, ohne daß die übrigen Insassen des Fahrzeugs gestört werden. In die Bedieneinheit ist weiterhin ein miniaturisiertes Mikrofon integriert. Somit kann das Bedienteil als individueller Telefonhörer und Sprecheinrichtung, sowie als Diktiergerät genutzt werden. Die Benutzung ist folglich auch für Fondpassagiere möglich.

In einer weiteren Ausgestaltung der Erfindung ist vorgesehen den Infrarotsender durch einen Ultraschallsender oder einen Hochfrequenzsender zu ersetzten.

Bei den vom Autoradiogehäuse zum Bedienteil übertragenen Signalen kann es sich auch um Datensignale handeln, die als Begleitinformationen zu einer Rundfunkübertragung nach dem RDS- oder dem DAB-System übertragen werden. Diese Datensignale, die beispielsweise den Namen der momentan laufenden Sendung, den Namen des Rundfunksenders, den Namen des Sängers eines momentan übertragenen Liedes oder Wetterinformationen angeben können, werden auf einem Display der Bedieneinheit dargestellt. Da das Bedienteil von jedem der Passagiere des Fahrzeugs an dessen Sitzplatz im Fahrzeug in Händen gehalten werden kann, kann jeder dieser Passagiere auf seinem Sitzplatz im Fahrzeug das Display ablesen.

Bei einer Benutzung des Autoradios als Diktiergerät dient die bidirektionale Signalübertragung zwischen dem Autoradiogehäuse und der Bedieneinheit einerseits dazu, um Steuerbefehle bezüglich des Kassettenlaufwerks oder des Halbleiterspeichers sowie Sprachsignale von der Bedieneinheit zum Autoradiogehäuse zu übertragen, so daß diese Sprachsignale in dem im Autoradiogehäuse vorgesehenen Speicher aufgezeichnet werden können, und andererseits dazu, bereits aufgezeichnete, vom Speicher wiedergegebene Audiosignale vom Autoradiogehäuse zur Bedieneinheit zu übertragen, um dem Benutzer ein Abhören der bereits aufgezeichneten Signale zu ermöglichen.

Weiterhin kann das abgenommene Bedienteil auch als Telefonhörer verwendet werden. Ist das genannte Bedienteil mit einer Zifferntastatur versehen, dann kann mittels dieser Zifferntastatur eine gewünschte Telefonnummer eingegeben werden. Danach erfolgt eine Übertragung von der eingegebenen Telefonnummer entsprechenden Signalen über die Infrarotverbindung zum Autoradiogehäuse. Ist an dieses Autoradiogehäuse ein Telefonmodul angeschlossen oder ist ein Telefonmodul in das Autoradiogehäuse integriert, dann kann über eine Telefonantenne eine Telefonverbindung aufgebaut werden. Auf diese Weise kann die zwischen dem Autoradiogehäuse und dem Bedienteil vorgesehene Infrarotverbindung auch zur bidirektionalen Übertragung von Telefonsignalen dienen, wobei das Bedienteil als Telefonhörer verwendet wird.

## Patentansprüche

1. Autoradio, welches ein rechteckförmiges Autoradiogehäuse aufweist, auf dessen Vorderseite ein abnehmbares Bedienteil aufgesetzt ist, welches Bedienteil mit einem Autoradiogehäuse über mindestens eine Kontaktleiste (8a, 8b) verbunden ist, über welche Kontaktleiste bei aufgesetztem Bedienteil mittels der Tasten des Bedienteils eingegebene Bedienbefehle an einen im Autoradiogehäuse vorgesehenen Mikrocomputer übertragbar sind, wobei das Autoradiogehäuse und das Bedienteil über einen Schnappmechanismus (9a, 9b), eine magnetische Fixierung oder eine Kombination aus einem Schnappmechanismus und einer magnetischen Fixierung aneinander befestigbar sind und auf der Vorderseite des Autoradiogehäuses eine Vielzahl von Kontaktstellen für Datenträger und/oder weitere elektronische Geräte vorgesehen ist,
**dadurch gekennzeichnet, daß**
das Bedienteil einen Infrarotsender aufweist und an der Vorderseite des Autoradiogehäuses ein Infrarotempfänger (10) vorgesehen ist, so daß das Bedienteil im abgenommenen Zustand als Fernbedienung dient,
und daß eine Kontaktstelle ein Einführschlitz (4, 5, 6a, 6b, 6c, 6d) für einen Datenträger ist, wobei der Einführschlitz nur bei abgenommenem Bedienteil zugänglich ist.

2. Autoradio nach Anspruch 1,
**dadurch gekennzeichnet, daß**
eine Kontaktstelle ein Mikrofonanschluss (1) ist, eine Kontaktstelle ein Kopfhöreranschluss (2) ist oder eine Kontaktstelle (7) ein Steckplatz für ein Handy ist.

3. Autoradio nach Anspruch 2,
**dadurch gekennzeichnet, daß**
eine Kontaktstelle (3) eine RS232C-Schnittstelle ist.

4. Autoradio nach Anspruch 1,
**dadurch gekennzeichnet, daß**
auf der Vorderseite des Autoradiogehäuses neben einer oder mehrerer der Kontaktstellen jeweils eine Leuchtdiode vorgesehen ist, die bei eingeführtem Datenträger aufleuchtet.

5. Autoradio nach einem oder mehreren der vorhergehenden Ansprüche,
**dadurch gekennzeichnet, daß**
an der Vorderseite des Autoradiogehäuses ein Infrarotsender (10) vorgesehen ist und das Bedienteil einen Infrarotempfänger aufweist, so daß zwischen dem Bedienteil und dem im Autoradiogehäuse angeordneten Mikrocomputer eine bidirektionale Signalübertragung durchführbar ist.

6. Autoradio nach Anspruch 5,
**dadurch gekennzeichnet, daß**
das Bedienteil einen Kopfhöreranschluß (2) aufweist.

7. Autoradio nach Anspruch 5 oder 6,
**dadurch gekennzeichnet, daß**
das Bedienteil ein Mikrofon und einen Lautsprecher aufweist.

8. Autoradio nach Anspruch 7,
**dadurch gekennzeichnet, daß**
das Bedienteil als Telefonhörer dient.

## Claims

1. A car radio which has a rectangular car radio housing on whose front side a removable operating panel has been placed, which operating panel is connected to a car radio housing via at least one contact strip (8a, 8b) via which contact strip operating commands input by means of the buttons of the operating panel, when the operating panel is in place, can be transmitted to a microcomputer provided in the car radio housing, with the car radio housing and the operating panel being able to be fastened to one another via a snap-action mechanism (9a, 9b), a magnetic fixing or a combination of a snap-action mechanism and a magnetic fixing and with a plurality of contact positions for data carriers and/or further electronic instruments being provided on the front side of the car radio housing,
**characterised in that**
the operating panel has an infrared transmitter and an infrared receiver (10) is provided at the front side of the car radio housing so that the operating panel serves as a remote control in the removed state;
and **in that** one contact position is an introductory slot (4, 5, 6a, 6b, 6c, 6d) for a data carrier, with the introductory slot only being accessible when the operating panel has been removed.

2. A car radio in accordance with claim 1, **characterised in that** one contact position is a microphone connection (1), one contact position is a headphone connection (2) or one contact position (7) is a docking station for a mobile phone.

3. A car radio in accordance with claim 2, **characterised in that** the contact strip (3) is an RS232C interface.

4. A car radio in accordance with claim 1, **characterised in that** a light emitting diode, which lights up when a data carrier is inserted, is provided on the front side of the car radio housing next to one or more of the contact positions.

5. A car radio in accordance with one or more of the preceding claims, **characterised in that** an infrared transmitter (10) is provided at the front side of the car radio housing and the operating panel has an infrared receiver so that a bidirectional signal transmission can be carried out between the operating panel and the microcomputer arranged in the car radio housing.

6. A car radio in accordance with claim 5, **characterised in that** the operating panel has a headphone connection (2).

7. A car radio in accordance with claim 5 or claim 6, **characterised in that** the operating panel has a microphone and a loudspeaker.

8. A car radio in accordance with claim 7, **characterised in that** the operating panel serves as a telephone handset.

## Revendications

1. Autoradio qui comporte un boîtier d'autoradio rectangulaire sur la face avant duquel est posé un élément de commande amovible, lequel élément de commande est raccordé à un boîtier d'autoradio par l'intermédiaire d'au moins une réglette de contact (8a, 8b) au moyen de laquelle, lorsque l'élément de commande est posé, des ordres de commande entrés à l'aide des touches de l'élément de commande peuvent être transmis à un microordinateur prévu dans le boîtier d'autoradio, le boîtier d'autoradio et l'élément de commande pouvant être fixés l'un à l'autre au moyen d'un mécanisme d'encliquetage (9a, 9b), d'une fixation magnétique ou d'une combinaison comportant un mécanisme d'encliquetage et une fixation magnétique, et une pluralité de points de contact pour des supports de données et/ou d'autres appareils électroniques étant prévue sur la face avant du boîtier d'autoradio,
**caractérisé en ce que**
l'élément de commande comporte un émetteur infrarouge et un récepteur infrarouge (10) est prévu sur la face avant du boîtier d'autoradio, de sorte que l'élément de commande sert de commande à distance à l'état démonté,
et **en ce qu'**un point de contact est une fente d'introduction (4, 5, 6a, 6b, 6c, 6d) pour un support de données, la fente d'introduction étant accessible uniquement lorsque l'élément de commande est enlevé.

2. Autoradio selon la revendication 1,
**caractérisé en ce que**
un point de contact est un raccord de microphone (1), un point de contact est un raccord d'écouteur (2) ou un point de contact (7) est un point de branchement pour un téléphone portable.

3. Autoradio selon la revendication 2,
**caractérisé en ce que**
un point de contact (3) est une interface RS232C.

4. Autoradio selon la revendication 1,
**caractérisé en ce que**
sur la face avant du boîtier d'autoradio, à côté d'un ou de plusieurs des points de contact, il est prévu une diode luminescente qui s'allume lorsque le support de données est inséré.

5. Autoradio selon une ou plusieurs des revendications précédentes,
**caractérisé en ce que**
sur la face avant du boîtier d'autoradio, il est prévu un émetteur infrarouge (10) et l'élément de commande comporte un récepteur infrarouge, de sorte qu'une transmission de signaux bidirectionnelle peut être réalisée entre l'élément de commande et le microordinateur placé dans le boîtier d'autoradio.

6. Autoradio selon la revendication 5,
**caractérisé en ce que**
l'élément de commande comporte un raccord d'écouteur (2).

7. Autoradio selon la revendication 5 ou 6,
**caractérisé en ce que**
l'élément de commande comporte un microphone et un haut-parleur.

8. Autoradio selon la revendication 7,
**caractérisé en ce que**
l'élément de commande sert d'écouteur téléphonique.
